## Europäisches Patentamt
## European Patent Office
## Office européen des brevets

(19)

(11) Numéro de publication: **0 058 103 B1**

(12)

# FASCICULE DE BREVET EUROPEEN

(45) Date de publication du fascicule du brevet:
**29.08.84**

(51) Int. Cl.³: **H 04 N 9/54,** G 02 B 21/22

(21) Numéro de dépôt: **82400075.6**

(22) Date de dépôt: **15.01.82**

(54) **Procédé et dispositif de visualisation tri-dimensionnelle à partir de vidéo-signaux, notamment pour microscopie électronique.**

(30) Priorité: **16.01.81 FR 8100758**

(43) Date de publication de la demande:
**18.08.82 Bulletin 82/33**

(45) Mention de la délivrance du brevet:
**29.08.84 Bulletin 84/35**

(84) Etats contractants désignés:
**AT BE CH DE FR GB IT LI LU NL SE**

(56) Documents cités:
**DE - A - 2 227 956**

(73) Titulaire: **Etablissement Public dit: CENTRE NATIONAL DE LA RECHERCHE SCIENTIFIQUE (CNRS), 15, Quai Anatole France, F-75007 Paris (FR)**

(72) Inventeur: **Marraud, Alain Roger, Résidence de Villebon Villebon S. Yvette, F-91120 Palaiseau (FR)**
Inventeur: **Bonnet, Maurice George, 14, Quartier Boeldieu, F-92800 Puteaux (FR)**

(74) Mandataire: **Corre, Jacques Denis Paul et al, Cabinet Regimbeau 26, Avenue Kléber, F-75116 Paris (FR)**

## Description

L'invention concerne la visualisation tri-dimensionnelle, plus communément connue sous le nom de photographie en relief.

Des dispositifs de photographie en relief utilisant des réseaux lenticulaires ou »gaufrages« ont déjà été proposés, en particulier, et depuis longtemps, par Monsieur Maurice BONNET. Cette technique est très au point, et donne des résultats saisissants. La prise de vue peut se faire soit à partir d'appareils spéciaux, incorporant dès la prise de vue un réseau lenticulaire (procédé direct), soit par composition d'une série d'image planes classiques du même objet, réalisées sous des angles de prise de vue légèrement différents (procédé indirect). Ce second procédé, très intéressant pour l'observation scientifique, prend du temps car il fait quasi nécessairement intervenir une étape spéciale de traitement photographique, qui est à la fois longue, délicate, et d'un coût négligeable.

Dans un certain nombre d'applications, il serait au contraire nécessaire de disposer rapidement — quasi en temps réel — d'une image composite. C'est le cas notamment en microscopie électronique.

La présente invention vient apporter un moyen qui permet l'élaboration très rapide d'images en relief.

A cet effet, l'invention propose un procédé qui comprend les opérations suivantes:

a) engendrer n jeux de vidéo-signaux ($S_k$; k variant de 1 à n), correspondant respectivement à n images de base ($V_k$) de l'objet, prises avec le même champ, mais sous différents angles ($A_k$);

b) construire une image composite constituée de régions contiguës, dont chacune se compose de n portions définies respectivement à partir des n jeux de vidéo-signaux, en choisissant dans chaque jeu les vidéo-signaux relatifs à la région concernée de l'image composite, ces n portions étant de surcroît agencées d'une manière qui correspond aux angles de prise de vue ($A_k$).

Au terme de cette opération b), on dispose déjà de l'image composite contenant les informations nécessaires pour la visualisation du relief. Le procédé se complète, immédiatement ou ultérieurement, par une autre opération:

c) disposer en coopération optique avec l'image composite ainsi construite un réseau lenticulaire, dans lequel la configuration du réseau correspond à la configuration des régions dans l'image composite, tandis que les caractéristiques optiques de chaque lentille élémentaire du réseau sont adaptées à l'arrangement des portions composant la région de l'image composite qui est associée à la lentille élémentaire concernée.

A l'opération a), les vidéo-signaux sont avantageusement enregistrés sous forme numérique. On considère actuellement qu'une numérisation avec au moins 16 ($2^4$), de préférence 32 ($2^5$) à 128 ($2^7$) niveaux de gris est suffisante pour la plupart des applications.

Dans un mode de réalisation préférentiel de l'invention, à l'opération a), les n images ($V_k$) de l'objet sont prises suivant des angles ($A_k$) définis par rapport à un axe commun, à l'opération b), les régions de l'image composite sont des bandes adjacentes parallèles à cet axe commun, tandis que dans chacune de ces régions, les portions d'image sont des tranches d'images adjacentes, également parallèles à l'axe commun, et à l'opération c), le réseau lenticulaire est un réseau de lentilles en secteurs de cylindres dont les génératrices sont également parallèles à l'axe commun.

Ceci peut être réalisé pratiquement de la manière suivante: chaque tranche d'image correspond à une zone prise au format de la région dans l'une des images de base, tandis que l'image composite est construite avec une anamorphose de rapport n entre la direction générale des tranches d'image et la direction qui lui est perpendiculaire. Une autre anamorphose est le plus souvent nécessaire, pour tenir compte de l'inclinaison des images de base.

Quoique l'on sache découper une image vidéo de toute manière désirée, il est plus simple de faire un découpage parallèle aux lignes: les signaux vidéo sont alors définis pour un balayage ligne parallèle à l'axe commun, ou direction générale des bandes et tranches d'image, et chaque tranche d'image comprend une ou plusieurs lignes de l'une des images de base.

Dans un mode de réalisation particulier de l'invention, l'opération b) consiste à:

b1) définir un numéro de ligne L initialement égal à 1,

b2) chercher en mémoire la ligne de rang L de l'image de base d'angle $A_1$,

b3) exciter une ligne d'un afficheur d'image selon chaque point de la ligne L de l'image de base d'angle $A_1$, répété n fois consécutivement,

b4) répéter sélectivement les opérations b2) et b3) pour la ligne de rang L des autres images de base, dans l'ordre des angles, et

b5) répéter les opérations b2) à b4) après avoir à chaque fois incrémenté le numéro de ligne L, et ce jusqu'à épuisement des lignes.

Dans l'opération b), la visualisation peut s'effectuer sur un cathoscope, ensuite photographié; l'image composite ainsi obtenue directement n'a plus qu'à recevoir un réseau lenticulaire. Mieux, on peut utiliser, en particulier dans le cas de vidéo-signaux numériques, un organe de sortie numérique capable de reproduction d'image sur un support d'enregistrement.

Bien que les images de base puissent être engendrées directement sous forme de vidéo-signaux (génération électronique d'images), on peut aussi prendre n images de base ($V_k$) de l'objet à l'aide d'une caméra vidéo, sous les angles différents ($A_k$), et enregistrer sélectivement ces n images de base.

L'invention s'applique en particulier au cas des microscopes électroniques, où les n images de base sont prises en disposant l'objet sous n angles différents.

En pratique, le nombre n des images de base est au moins égal à 4, de préférence au moins égal à 8; le nombre des régions (ou bandes) de l'image composite — comprenant chacune n portions ou tranches respectives des images de base — est de l'ordre de grandeur de plusieurs centaines et dépend notamment de la taille de l'image en relief que l'on désire obtenir finalement.

L'invention concerne aussi les dispositifs pour la mise en oeuvre du procédé ci-dessus.

D'autres caractéristiques et avantages de l'invention apparaîtront à la lecture de la description détaillée qui va suivre, faite en référence aux dessins annexés, sur lesquels:

La fig. 1 illustre schématiquement de manière générale la mise en oeuvre du procédé selon l'invention; et

la fig. 2 illustre schématiquement une mise en oeuvre particulière de ce procédé.

La description détaillée se place tout d'abord dans le cadre de l'application au microscope électronique à transmission.

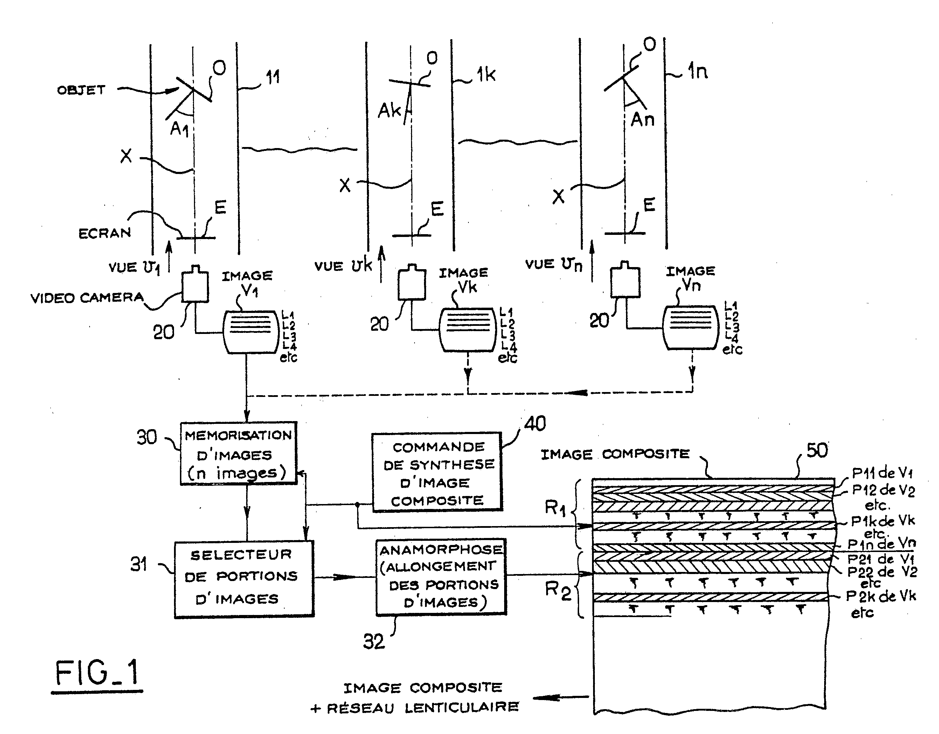

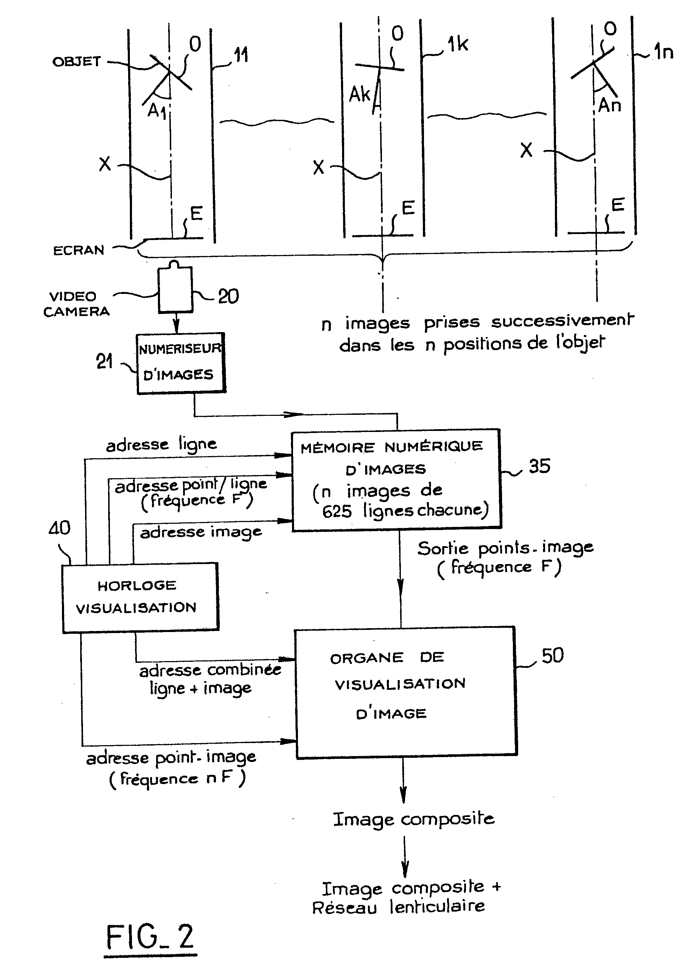

Sur les fig. 1 et 2, les références 11, lk et ln schématisent le générateur d'image d'un même microscope électronique, observant un objet O, dont l'image électronique est visualisée sur un écran fluorescent E. Le dispositif est vu en coupe plane, et illustre le fait que n images électroniques de l'objet sont prises successivement suivant des angles respectifs $A_k$, avec k variant de 1 à n. Les angles de prise de vue sont considérés par rapport à un axe commun passant par l'intersection de l'objet (ou de son plan principal) avec l'axe »optique« X du microscope électronique, cet axe commun étant par ailleurs perpendiculaire qu plan de la figure. En d'autres termes, l'angle de prise de vue ($A_k$) est l'angle entre le plan normal à la figure qui passe par l'axe optique X et un plan normal au plan principal de l'objet.

En pratique, les angles ($A_k$) sont distribués réguliqerement autour de l'axe optique X.

Pour les n positions successives de l'objet, on obtient donc sur l'écran E du microscope électronique des vues successives, notées sur la fig. 1 $v_1, \ldots v_k \ldots v_n$. Une vidéo caméra 20 va prendre successivement chacune de ces vues telles que $v_k$, qui apparaît sur l'écran E. A chaque fois, la caméra 20 pourra en donner une image correspondante $V_1 \ldots V_k, \ldots V_n$, dont le nombre de lignes est lié aux caractéristiques de la caméra vidéo. Pour les besoins de la présente description, ces lignes sont numérotées L1, L2, L3, L4, etc. En pratique, pour le confort visuel de l'observateur, les lignes d'une image de télévision sont fréquemment entrelacées. On supposera pour simplifier la présente description qu'elles ne le sont pas ici, étant observé que l'utilisation d'une image entrelacée ne change pas fondamentalement la mise en oeuvre de la présente invention. Les écrans qui visualisent les images $V_1$ à $V_n$ sont utilisés pour l'observation directe par l'expérimentateur, ainsi que comme point de départ pour la mise en oeuvre de la présente invention, dans le but d'obtenir une image finale en relief.

Ainsi, dans la position relative à la vue $v_1$, les signaux vidéo élaborés par la caméra 20, et qui correspondent à l'image vidéo $V_1$, sont transmis à un dispositif de mémorisation d'image vidéo 30. Il en sera de même pour toutes les autres vues de l'objet sous les différents angles, et notamment pour la vue $v_k$ avec l'image vidéo associée $V_k$, et pour la vue $v_n$, avec l'image vidéo associée $V_n$. Le fait que la caméra fournit successivement au dispositif de mémorisation d'image 30 les signaux vidéo correspondant à chacune des images prises est illustré sur la fig. 1 par des traits tiretés, la caméra 20 étant illustrée en position pour chacun des angles de prises de vues représentés.

Après les n prises de vues ainsi effectuées, le dispositif de mémorisation d'image 30 comprend donc n jeux d'informations vidéo, correspondant respectivement à n images de base ($V_k$) de l'objet, prises avec le même champ, mais sous les différents angles ($A_k$). Ceci constitue l'opération a) du procédé selon l'invention. On notera cependant qu'au lieu d'engendrer ces signaux vidéo par une prise de vue effective, on peut les produire d'une autre manière, notamment à l'aide des dispositifs connus sous le nom de générateurs électroniques d'images.

La fig. 1 comporte par ailleurs un dispositif 40, qui sert qa la commande de synthèse de l'image composée, en coopération avec un sélecteur de portions d'image 31, un dispositif d'anamorphose 32, et un dispositif de visualisation proprement dit de l'image composite, noté 50. Sur la fig. 1, ce dispositif 50 est illustré simplement sous la forme de l'écran qui va donner l'image composite, afin de permettre une meilleure compréhension de la présente invention.

On fait, à partir d'un dispositif de mémorisation d'image tel que 30, et qu'il soit de type analogique ou numérique, extraire les signaux vidéo qui correspondent à toutes portions désirées de l'image. Cela s'effectue ici à l'aide du sélecteur de portions d'image 31, et sous la commande du dispositif 40. A cet effet, le dispositif 40 produit successivement des ordres correspondant à des régions de l'image composite désirées, et ces ordres sont transmis d'une part au dispositif de mémorisation d'image 30, et d'autre part au dispositif de visualisation 50, afin d'exciter celui-ci pour qu'il opère dans la région désirée.

Ainsi, pour la première région $R_1$ de l'image composite, le dispositif 40 va agir sur la mémoire d'image 30 et sur le sélecteur de portions d'image 31, afin que ce dernier sélectionne d'abord une portion $P_{11}$ de l'image électronique $V_1$ puis une portion correspondante, notée $P_{12}$ et prise dans l'image $V_2$, et ainsi de suite, une portion $P_{1k}$, prise dans l'image $V_k$, pour aller finalement jusqu'à la dernière portion $P_{1n}$, prise dans l'image de base $V_n$. L'ensemble de ces portions d'image $P_1$, pris successivement dans les différentes images de base, constitue la première région $R_1$ de l'image composite.

De manière préférentielle, les régions telles que $R_1$ de l'image composite sont des bandes, ici horizontales, tandis que les portions, telles que $P_1$, qui constituent ces régions, telles que $R_1$, sont des tranches prises respectivement dans chacune des images de base. Ces tranches s'étendent alors parallèlement les unes aux autres, et adjacentes les unes aux autres, et définissent par là même des régions de direction générale parallèles.

L'homme de l'art comprendra que l'on peut définir de plusieurs façons la manière dont les tranches telles que $P_1$ sont prélevées dans les images de base.

L'une des façons les plus simples consiste qa prendre purement et simplement dans chacune des images de base une portion dont le format correspond à la géométrie de la région. Mais, dans ce cas, puisque chaque région se compose de n tranches adjacentes, l'une des dimensions de chaque région sera n fois trop grande par rapport à l'autre. Le dispositif 32 vient alors réaliser une anamorphose des portions ou tranches d'image sélectionnées par le dispositif 31, afin de rétablir une géométrie correcte de l'image. On verra plus loin un mode de réalisation de l'anamorphose, suivant lequel on allonge d'un rapport n chacune des portions ou tranches d'image.

En variante, l'anamorphose peut être réalisée au contraire en condensant chaque portion ou tranche d'image sélectionnée dans l'une des images de base suivant sa largeur, et en faisant par exemple la moyenne de n points lumineux pris transversalement dans chacune des tranches. Bien entendu, de nombreuses autres solutions intermédiaires sont possibles entre ces deux solutions extrêmes, suivant lesquelles on pourrait par exemple allonger d'un rapport inférieur à n les tranches prélevées dans les images de base, et les rétrécir en largeur du rapport complémentaire, afin de rétablir le format normal désiré pour l'image composite.

Jusqu'à présent, on a décrit en détail ce qui concerne la région $R_1$ de l'image composite. La région suivante $R_2$ s'élabore de la même manière, en prenant d'abord une tranche $P_{21}$ de l'image vidéo $V_1$, puis une tranche $P_{22}$ de l'image vidéo $V_2$, et ainsi de suite une tranche $P_{2k}$ de l'image $V_k$, jusqu'à la tranche $P_{2n}$ de la dernière image de base $V_n$. Ce processus continue ensuite, pour toutes les régions désirées.

Après que l'image composite a été entièrement constituée, elle est soit photographiée, si le dispositif de visualisation 50 est un écran vidéo, soit utilisée telle quelle, si ce dispositif est d'un type fournissant directement une image sur support d'enregistrement, et on superpose un réseau lenticulaire approprié sur l'image composite.

Avec une image par tranches parallèles telles que définies plus haut, le réseau lenticulaire sera un réseau de lentilles en secteur de cylindre, dont les génératrices sont parallèles à la direction principale des tranches d'image. On voit donc que la configuration du réseau lenticulaire utilisée correspond à la configuration des régions ou bandes de même qu'à celle des portions ou tranches figurant dans l'image composite. Les caractéristiques optiques de chacune des lentilles élémentaires du réseau sont adaptées à l'arrangement des tranches d'image dans chacune des régions, avec notamment un angle de champ et une distance focale convenable.

En variante d'un réseau lenticulaire en secteur de cylindre, on pourrait également utiliser un réseau lenticulaire formé d'une multitude de sphères, ou réseau sphérulaire. Dans un tel réseau, la forme des régions reproduirait la maille du réseau lenticulaire. La prise de vue est un peu plus compliquée, les angles de prises de vues pouvant être plus nombreux et établis suivant plusieurs directions. Il en est de même pour la sélection des portions d'image.

Si l'on revient maintenant au cas où le réseau lenticulaire est à lentilles à secteur de cylindre, et où l'image composite est constituée de tranches parallèles longilignes, on peut concevoir également que ces tranches soient prises en sens perpendiculaire au balayage de lignes utilisé à la prise de vue. On estime cependant préférable à l'heure actuelle que ces tranches s'étendent dans le sens des lignes de la prise de vue. Un mode de réalisation de ce type sera maintenant décrit plus en détail à propos de la fig. 2.

Sur la fig. 2, on retrouve le microscope électronique, illustré en 11, 1k, 1n, en trois positions parmi les n positions successives de prises de vues. La vidéo-caméra 20 enregistre chacune des images apparaissant à chaque fois sur l'écran de sortie du microscope électronique, et chacune des images obtenues est appliquée à un numériseur d'image 21, pour être ensuite enregistrée dans une mémoire numérique d'image 35. Cette mémoire 35 comprend donc finalement des signaux vidéo relatifs à chacune des images vidéo $V_1$, ... $V_k$, ... $V_n$, déjà décrites à propos de la fig. 1.

Dans la mémoire 35, on peut accéder à chacun des points de chacune des images en définissant tout d'abord une adresse d'image, par exemple de l à n, une adresse de ligne, par exemple de 1 à 625, et une adresse de point sur la ligne, allant par exemple de 1 à 400. On considérera pour la suite de la description qu'une horloge de visualisation 40 est apte à définir ces signaux d'adresses à une cadence coordonnée, de telle manière que l'on définisse dans chaque image, puis dans chaque ligne, les adresses de point de ligne à une fréquence F. Pour chaque point de ligne, la mémoire numérique d'image comprend par exemple seize bits, ce qui est estimé actuellement comme minimal pour une bonne reproduction, et correspond à seize niveaux de gris.

Ainsi excitée par l'horloge de visualisation 40, la mémoire numérique d'image 35 va sortir des points d'image à la fréquence F, en commençant par la première ligne de la premiqere image, puis la première ligne de la deuxième image, etc., jusqu'à la première ligne de l'image n; on continue ensuite avec la deuxième ligne de chacune des images, et ainsi de suite jusqu'à la 625 ème ligne. Les signaux vidéo ainsi délivrés par la mémoire 35 sont appliqués à un organe de visualisation d'image à commande numérique 50. Cet organe 50 est choisi avec une définition d'image nettement supérieure à celle de la caméra vidéo 20, de manière qu'il puisse fournir n fois 625 lignes, et sur chaque ligne n fois 400 points, dans l'exemple précédemment choisi.

Lorsqu'elle adresse la mémoire numérique 35, l'horloge de visualisation fixe d'abord l'adresse de ligne, pour adresser successivement chacune des images. Au contraire, lorsqu'elle adresse l'organe de visualaisation d'image 50, l'horloge 40 fournit une adresse combinée ligne + image, qui est incrémentée chaque fois que l'adresse d'image ou l'adresse de ligne augmente d'une unité. En conséquence, l'organe de visualisation d'image 50 va se trouver sur la première ligne lorsqu'il s'agira dans la mémoire numérique 35 d'adresser la première ligne de la première image; l'organe 50 va être placé sur sa deuxième ligne de la deuxième image, et ainsi de suite jusqu'à la première ligne de l'image n. On continue ensuite avec la deuxième ligne de chacune des images, pour aller jusqu'à épuisement de toutes les lignes de toutes les images. On voit donc que l'on pourra de la sorte remplir dans l'organe de visualisation d'image 50. n fois 625 lignes.

On se reppellera maintenant que les points image sortent pour chaque ligne de la mémoire numérique 35 à la cadence F. En revanche, l'horloge de visualisation 40 fournit des adresses de points d'image en direction de l'organe de visualisation d'image 50, mais cette fois à une fréquence n fois F. De la sorte, l'organe de visualisation 50 va délivrer n points consécutifs pour une même information en sortie de la mémoire numérique d'image 35. Ceci réalise de manière très simple l'anamorphose par allongement des tranches d'image, ici des lignes, que l'on a décrit plus haut à propos du dispositif 32 de la fig. 1.

En pratique, l'objet est vu selon des angles différemment inclinés sur l'axe optique. L'anamorphose doit également en tenir compte, de préférence. Si l'on admet que l'objet couvre 625 lignes lorsqu'il est perpendiculaire à l'axe optique, il en couvrira par exemple 624 lorsqu'il est laegèrement incliné, la 625ème ligne étant inutile. On peut alores remplacer la 625ème ligne inutile par une répétition de la 624ème ligne. En notant alpha l'angle d'inclinaison de l'objet sur l'axe optique, le changement de format de l'image inclinée est proportionnel à 1 — cos alpha. Chaque fois que la variation de 1 — cos alpha correspond à une ligne du balayage, on répétera une ligne dans l'image $V_k$ concernée pour rattraper la différence de format du champ observé.

Au terme de ce processus, on obtient sur l'organe de visualisation d'image une image composite qui contient déjà toutes les informations nécessaires pour une visualisation en relief, avec un réseau lenticulaire en secteur de cylindre approprié.

Comme précédemment indiqué, l'organe de visualisation d'image 50 peut être un tube cathodique ou cathoscope à commande numérique. On pourra ainsi utiliser un tube cathodique à haute définition, avec ou sans mémoire. Il faut alors photographier l'image ainsi obtenue, et lui faire subir les opérations de traitement habituelles, mais à un seul exemplaire, et sans problème de recombinaison pour aboutir à l'image composite, celle-ci étant élaborée dès l'origine. En apposant le réseau lenticulaire sur l'image obtenue de cette manière, on tiendra compte naturellement de la légère inclinaison des lignes, qui se manifeste le cas échéant à raison du balayage du tube cathodique.

Dans une variante avantageuse de l'invention, on utilise un organe de reproduction d'image à commande numérique qui délivre par lui-même une image permanente, par exemple le périphérique vendu sous le nom de VISOR par Soro électrooptique ou bien les appareils analogues de Bell & Howell. De tels dispositifs sont couramment utilisés en liaison avec des ordinateurs afin d'obtenir des clichés à densité variable. Comme précédemment, il suffira ensuite d'appliquer sur l'image ainsi obtenue à réseau lenticulaire à secteurs de cylindre, des caractéristiques appropriées.

On voit que le dispositif de la fig. 2 fonctionne, sous le contrôle de l'horloge de visualisation 40, pour réliser les étapes suivantes:

1. définir un numéro de ligne L initialement égal à 1,
2. chercher dans la mémoire 35 la ligne de rang L de l'image de base d'angle $A_1$, ou première image de base $V_1$,
3. exciter la première ligne de l'organe de visualisation d'image 50 selon chaque point de la ligne L de l'image de base d'angle $A_1$, répété n fois consécutivement,
4. répéter sélectivement les opérations 2. et 3. pour la ligne L des autres images de base, dans l'ordre des angles, et
5. répéter les opérations 2. à 4., après avoir à chaque fois incrémenté le numéro de ligne L, et ce jusqu'à épuisement des lignes.

Dans le mode de réalisation on de la fig. 2, chaque tranche utilisée dans l'image composite est définie par une seule ligne prélevée telle quelle dans l'une des images de base avec une anamorphose de rapport n sur sa longueur. En variante, on peut bien entendu constituer chaque tranche de l'image composite à partir de plusieurs lignes adjacentes de l'image de base, si la définition finalement désirée le permet. Lorsqu'on va jusqu'à utiliser chaque tranche de l'image composite n lignes consécutives de l'une des images de base, on peut alors remplacer l'anamorphose par allongement dans le rapport n par une anamorphose consistant purement et simplement à produire un seul point d'image, en faisant la moyenne des n points rencontrés transversalement sur les n lignes adjacentes prélevées dans chaque image de base.

Comme précédemment indiqué, on peut envisager des variantes d'anamorphose, en jouant de manière différente sur l'allongement des lignes, et sur le nombre de lignes prélevées.

Bien entendu, si la forme des points-images de l'organe de visualisation 50 est différente de celle utilisée à la prise de vue, on en tiendra compte dans la réalisation de cette anamorphose.

A l'heure actuelle, l'une des applications préférentielles de l'invention concerne le microscope électronique. Dans certains microscopes électroniques, dits à balayage, le faisceau électronique principal est soumis à un balayage du type télévision, et un détecteur recueille le reayonnement (électrons ou rayons X en général) émanant des différents points successivement explorés dans l'objet. Le signal issu du détecteur est appliqué directement comme commande de luminance à un tube cathodique de visualisation dont le balayage est synchrone de celui du faisceau d'électrons sur l'objet. L'écran du tube cathodique jouerait alors le rôle de l'aecran E déjà cité, mais on simplifie très avantageusement le dispositif en mémorisant directement — avec numérisation — les signaux issus du détecteur.

Dans cette application, la présente invention permet un suppression quasi complète des opérations photographiques, et par là même un gain de temps considérable, l'économie des frais dûs aux produits photographiques (sur face sensible et produits chimiques), et également la possibilité de travailler pratiquement en temps réel.

**Revendications**

1. Procédé de visualisation tri-dimensionnelle d'un objet, caractérisé par les opérations suivantes:

a) engendrer n jeux de vidéo-signaux ($S_k$; k variant de 1 à n), correspondant respectivement à n images de base ($V_k$) de l'objet, prises avec le même champ, mais sous différents angles ($A_k$);

b) construire une image composite constituée de régions contiguës, dont chacune se compose de n portions définies respectivement à partir des n jeux de vidéo-signaux, en choisissant dans chaque jeu les vidéo-signaux relatifs à la région concernée de l'image composite ces n portions étant de surcroît agencées d'une manière qui correspond aux angles de prise de vue ($A_k$); et

c) disposer en coopération optique avec l'image composite ainsi construite un réseau lenticulaire, dans lequel la configuration du réseau correspond à la configuration des régions dans l'image composite, tandis que les caractéristiques optiques de chaque lentille élémentaire du réseau sont adaptées à l'arrangement des portions composant la région de l'image composite qui est associée à la lentille élémentaire concernée.

2. Procédé selon la revendication 1, caractérisé par le fait qu'à l'opération a), les vidéo-signaux sont enregistrés sous forme numérique.

3. Procédé selon l'une des revendications 1 et 2, caractérisé parle fait qu'à l'opération a), les n images ($V_k$) de l'objet sont prises suivant des angles ($A_k$) définis par rapport à un axe commun, qu'à l'opération b), les régions de l'image composite sont des bandes adjacentes parallèles à cet axe commun, tandis que dans chacune de ces régions, les portions d'image sont des tranches d'images adjacentes, également parallèles à l'axe commun, et qu'à l'opération c), le réseau lenticulaire est un réseau de lentilles en secteurs de cylindres dont les génératrices sont également parallèles à l'axe commun.

4. Procédé selon la revendication 3, caractérisé par e fait que chaque tranche d'image correspond à une zone prise au format de la région dan l'une des images de base, tandis que l'image composite est construite avec une anamorphose de rapport n entre la direction générale des tranches d'image et la direction que lui est perpendiculaire.

5. Procédé selon l'une des revendications 3 et 4, caractérisé par le fait que les signaux vidéo sont définis pour un balayage ligne parallèle à l'axe commun, ou direction générale des bandes et tranches d'image, chaque tranche d'image comprenant une ou plusieurs lignes de l'une respective des images de base.

6. Procédé selon l'une des revendications 3 à 5, caractérisé par le fait que l'opération b) consiste à:

b1) définir un numéro de ligne L initialement égale à 1,

b2) chercher en mémoire la ligne de rang L de l'image de base d'angle $A_1$,

b3) exciter une ligne d'un afficheur d'image selon chaque point de la ligne L de l'image de base d'angle $A_1$, répété n fois consécutivement,

b4) répéter sélectivement les opérations b2) et b3) pour la ligne de rang L des autres images de base, dans l'ordre des angles, et

b5) répéter les opérations b2) à b4) après avoir à chaque fois incrémenté le numéro de ligne L, et ce jusqu'à puisement des lignes.

7. Procédé selon la revendication 6, caractérisé par le fait que les signaux vidéo relatifs aux images de base sont numérisés avec au moins 16 niveaux de gris, de préférence 32 à 128 niveaux de gris.

8. Procédé selon l'une des revendications 1 à 7, caractérisé par le fait que l'opération b) s'effectue par visualisation sur un cathoscope ou un organe de sortie numérique capable de reproduction d'image.

9. Procédé selon l'une des revendications 1 à 8, caractérisé par le fait que l'opération a) consiste à prendre n images de base ($V_k$) de l'objet avec une caméra vidéo sous les angles différents ($A_k$) et à enregistrer ces n images de base.

10. Procédé selon la revendication 9, caractérisé par le fait que les n images vidéo de base de l'objet sont des vues au microscope électronique, pour lesquelles l'objet est disposé successivement selon les angles différents ($A_k$).

11. Procédé selon l'une des revendications 1 à 10, caractérisé par le fait que le nombre n des images de base est au moins égal à 4, de préférence au moins égal à 8, et que le nombre des régions de l'image composite est de l'ordre de grandeur de plusieurs centaines.

12. Dispositif pour la mise en oeuvre du procédé selon l'une des revendications 1 à 11.

**Patentansprüche**

1. Verfahren zum dreidimensionalen Darstellen eines Objektes, gekennzeichnet durch die folgenden Schritte:

a) Erzeugen von n Gruppen von Videosignalen ($S_k$ : k; variiert von 1 bis n), die entsprechend n Basisbildern ($V_k$) des Objektes zugeordnet sind, welche mit dem gleichen Gesichtsfeld, jedoch unter unterschiedlichen Winkeln ($A_k$) aufgenommen werden;

b) Konstruieren eines zusammengesetzten Bildes, das aus aneinandergrenzenden Bereichen aufgebaut wird, von denen jeder aus n Bildteilen zusammengesetzt ist, die entsprechend von den n Gruppen von Videosignalen stammen, indem aus jeder Gruppe die Videosignale ausgewählt werden, die sich auf den betreffenden Bereich des zusammengesetzten Bildes beziehen, wobei überdies die n Bildteile entsprechend den Aufnahmewinkeln ($A_k$) angeordnet werden; und

c) Einrichten eines Linsenrasters im optischen Zusammenwirken mit dem in dieser Weise konstruierten zusammengesetzten Bild, wobei die Konfiguration des Rasters der Konfiguration der Bereich in dem zusammengesetzten Bild entspricht und die optischen Eigenschaften jeder elementaren Linse des Rasters an die Anordnung der Bildteile angepaßt sind, von denen der der betreffenden Linse zugeordnete Bereich des zusammengesetzten Bildes aufgebaut wird.

2. Verfahren nach Anspruch 1, dadurch gekennzeichnet, daß in dem Schritt a) die Videosignale in numerischer Form gespeichert werden.

3. Verfahren nach Anspruch 1 oder 2, dadurch gekennzeichnet, daß in dem Schritt a) die n Bilder ($V_k$) des Objektes unter Winkeln ($A_k$) aufgenommen werden, die mit Bezug auf eine gemeinsame Achse bestimmt sind, daß in dem Schritt b) die Bereiche des zusammengesetzten Bildes einander benachbarte, parallel zu der gemeinsamen Achse verlaufender Bänder sind und in jedem der Bereiche die Bildteile einander benachbarte Bildstreifen sind, die ebenfalls parallel zu der gemeinsamen Achse verlaufen, und daß im Schritt c) das Linsenraster ein Raster aus Linsen in Form von Zylinderausschnitten ist, deren Erzeugenden ebenfalls parallel zu der gemeinsamen Achse verlaufen.

4. Verfahren nach Anspruch 3, dadurch gekennzeichnet, daß jeder Bildstreifen einer im Format des Bereiches in dem einen Basisbild gehaltene Zone entspricht und das zusammengesetzte Bild mit einer Anamorphose im Verhältnis n zwischen der Hauptrichtung der Bildstreifen und der dazu senkrechten Richtung konstruiert wird.

5. Verfahren nach Anspruch 3 oder 4, dadurch gekennzeichnet, daß die Videosignale für eine Zeilenabtastung parallel zu der gemeinsamen Achse oder der Hauptrichtung der Bänder und der Bildstreifen bestimmt werden, wobei jeder Bildstreifen eine oder mehrere Zeilen des jeweiligen Basisbildes enthält.

6. Verfahren nach einem der Ansprüche 3 bis 5, dadurch gekennzeichnet, daß der Schritt b) besteht aus:

b1) Bestimmen einer Zeilennummer L anfänglich zu 1,

b2) Abrufen der Zeile der Ordnung L des Basisbildes mit dem Winkel $A_1$,

b3) Erregen einer Zeile eines Bildanzeigegerätes in Übereinstimmung mit jedem Punkt der Zeile L des Basisbildes mit dem Winkel $A_1$, n mal aufeinanderfolgend wiederholt,

b4) selektives Wiederholen der Schritte b2) und b3) für die Zeile der Ordnung L der anderen Basisbilder in der Reihenfolge der Winkel, und

b5) Wiederholen der Schritte b2) bis b4), nachdem jedesmal die Nummer der Zeile L inkrementiert wurde, bis zum Aufbrauchen der Zeilen.

7. Verfahren nach Anspruch 6, dadurch gekennzeichnet, daß die die Basisbilder betreffenden Videosignale mit wenigstens 16 Graupegeln, vorzugsweise 32 bis 128 Graupegeln, numerisiert werden.

8. Verfahren nach einem der Ansprüche 1 bis 7, dadurch gekennzeichnet, daß der Schritt b) durch Darstellung auf einer Fernsehröhre oder auf einer zur Bildreproduktion fähigen Vorrichtung mit numerischem Ausgang durchgeführt wird.

## 0 058 103

**13**

9. Verfahren nach einem der Ansprüche 1 bis 8, dadurch gekennzeichnet, daß der Schritt a) darin besteht, daß n Basisbilder ($V_k$) des Objektes mit einer Videokamera unter unterschiedlichen Winkeln ($A_k$) aufgenommen werden und diese n Basisbilder gespeichert werden.

10. Verfahren nach Anspruch 9, dadurch gekennzeichnet, daß die n Video-Basisbilder des Objektes Bilder aus einem Elektronenmiskroskop sind, für welche das Objekt aufeinanderfolgend entsprechend der unterschiedlichen Winkel ($A_k$) angeordnet wird.

11. Verfahren nach einem der Ansprüche 1 bis 10, dadurch gekennzeichnet, daß die Anzahl n der Basisbilder wenigstens 4, vorzugsweise wenigstens 8, beträgt und daß die Anzahl der Bereiche des zusammengesetzten Bildes in der Größenordnung von mehreren Hundert liegt.

12. Vorrichtung zur Durchführung des Verfahrens nach einem der Ansprüche 1 bis 11.

## Claims

1. A method for the three-dimensional visualisation of an object, characterized by the following operations:

a)   producing n sets of video signals ($S_k$; k varying from 1 to n), corresponding respectively to n basic images ($V_k$) of the object, taken with the same field, but at different angles ($A_k$);

b)   building a composite image from adjoining zones, each of which zones is made up of n portions defined respectively from n sets of video signals, by selecting from each set those video signals which relate to that particular zone of the composite image, the n portions being moreover arranged in a way corresponding to the shooting angles ($A_k$); and

c)   disposing in optical cooperation with the composite image thus constructed a lenticular network in which the configuration of the network corresponds to the configuration of the zones in the composite image, while the optical characteristics of each elemental lens of the network are adapted to the arrangement of the portions making up that zone of the composite image which is associated with the elemental lens in question.

2. A method according to claim 1, characterized in that in operation a) the video signals are recorded in numerical form.

3. A method according to one of claims 1 and 2, characterized in that in operation a) the n images ($V_k$) of the object are taken at angles ($A_k$) defined with respect to a common axis, in operation b) the zones of the composite image are adjacent bands parallel with such common axis, while in each of these zones the image portions are sections of adjacent images also parallel with the common axis, and in operation c) the

**14**

lenticular network is a network of lenses which are segments of cylinders whose generatrices are also parallel with the common axis.

4. A method according to claim 3, characterized in that each image section corresponds to an area taken with the format of the zone in one of the basic images, while the composite image is constructed with an anamorphosis of ratio n between the general direction of the image sections and the direction perpendicular thereto.

5. A method according to one of claims 3 and 4, characterized in that the video signals are defined by a line scan parallel with the common axis or general direction of the bands and image sections, each image section comprising one or more lines of the or each basic image.

6. A method according to one of claims 3 to 5, characterized in that operation b) consists in:

b1)   defining a line number L initially equal to 1,

b2)   seeking in the memory the rank line L of the basic image of angle $A_1$,

b3)   energizing a line of an image-displaying system in accordance with each point of the line L of the basic image of angle $A_1$, repeated n times consecutively,

b4)   repeating selectively operations b2) and b3) for the rank line L of the other basic images, in the order of the angles, and

b5)   repeating operations b2) b4) after each time incrementing the line number L, continuing until the lines are exhausted.

7. A method according to claim 6, characterized in that the video signals relating to the basic images are numerized with at least 16 levels of grey, preferably 32 to 128 levels of grey.

8. A method according to one of claims 1 to 7, characterized in that operation b) is performed by visualaization on a cathoscope or numerical output member capable of image production.

9. A method according to one of claims 1 to 8, characterized in that operation a) consists in taking n basic images ($V_k$) of the object with a video camera at the different angles ($A_k$) and in recording such n basic images.

10. A method according to claim 9, characterized in that the n basic video images of the object are electron microscope views, for which the object is disposed successively at the different angles ($A_k$).

11. A method according to one of claims 1 to 10, characterized in that the number n of basic images is at least 4, preferably at least 8, and the number of zones of the composite image is of the order of magnitude of several hundreds.

12. A device for the performance of the method according to one of claims 1 to 11.

FIG_1

OBJET

O
11

A1

X

E

ECRAN

O
1k

Ak

X

E

O
1n

An

X

E

n images prises successivement
dans les n positions de l'objet

VIDEO
CAMERA — 20

21 — NUMERISEUR
D'IMAGES

adresse ligne

adresse point/ligne
(fréquence F)

40

adresse image

MÉMOIRE NUMÉRIQUE
D'IMAGES

(n images de
625 lignes chacune)

— 35

Sortie points-image
(fréquence F)

HORLOGE
VISUALISATION

adresse combinée
ligne + image

ORGANE DE
VISUALISATION
D'IMAGE

— 50

adresse point-image
(fréquence n F)

Image composite

Image composite +
Réseau lenticulaire

FIG_2

11